# EUROPÄISCHE PATENTSCHRIFT

(11) **EP 1 600 331 B1**
(45) Veröffentlichungstag und Bekanntmachung des Hinweises auf die Patenterteilung: **26.03.2008**
(21) Anmeldenummer: 05009948.0
(22) Anmeldetag: 06.05.2005
(51) Int. Cl.: B60R 7/04, E05D 15/50

(54) **Gehäuse mit schwenkbaren Deckel**
Container with pivotable cover lid
Réceptacle avec un couvercle pivotant

(30) Priorität: 26.05.2004 DE 102004025655
(43) Veröffentlichungstag der Anmeldung: 30.11.2005
(73) Patentinhaber: Lisa Dräxlmaier GmbH, 84137 Vilsbiburg (DE)
(72) Erfinder: Hehn, Wilhelm, 84168 Aham (DE)
(74) Vertreter: HOFFMANN EITLE

(56) Entgegenhaltungen:
- EP-A- 1 304 439
- US-A- 5 647 652
- US-A- 5 931 336
- US-B1- 6 250 729

## Beschreibung

### Gebiet der Erfindung

Die Erfindung betrifft ein verschließbares Gehäuse, beispielsweise zur Aufnahme eines Telefons, insbesondere zur Verwendung in Kraftfahrzeugen, mit um jeweils eine von zwei gegenüberliegenden Achsen schwenkbar gelagertem Deckelelement.

### Stand der Technik

In den Mittelarmlehnen oder in der Mittelkonsole von Kraftfahrzeugen werden vor allem in Kraftfahrzeugen der oberen Mittelklasse oder der Oberklasse Aufbewahrungsfächer angeordnet, welche zur Aufnahme von zu verstauenden Gegenständen, beispielsweise eines Autotelefons dienen können. Diese werden üblicherweise mittels aufklappbarer Deckelelemente oder verschiebbarer Jalousiesysteme abgedeckt.

Aufklappbare Deckelelemente werden dabei derart an einem Rahmen oder einem Behälter angeordnet, dass sie zumindest um eine Schwenkachse um etwa 90° verschwenkbar sind.

Die US 5,931,336 stellt beispielsweise einen Behälter zur Verfügung, bei dem der Deckel jeweils um zwei gegenüberliegende und zu den Seitenflächen des Behälters parallel stehende Drehachsen verschwenkbar ist. Hierdurch ist es möglich, den Behälter sowohl von der Fahrer- als auch von der Beifahrerseite aus zu öffnen und somit von der jeweiligen Seite Zugang zu den aufbewahrten Gegenständen, insbesondere einem in dem Behälter gelagerten Telefon zu erlangen.

Fahrzeuginsassen erhalten somit in beiden Öffnungszuständen ungehinderten Zugang zu dem Behälterinneren. Jedoch stellte sich in der Praxis heraus, dass bei einem derartigen Behälter ein gleichzeitiges Lösen von Arretierungen an beiden Schwenkachsen nicht in ausreichender Weise verhindert werden konnte.

Zur Verhinderung eines gleichzeitigen Lösens von Arretiermitteln an beiden Schwenkachsen wurden daher aufwändige Konstruktionen entworfen und insbesondere innerhalb des Deckelelements angeordnet, durch die ein gleichzeitiges Lösen zu beiden Seiten des Gehäuses verhindert wurde. Derartige, aus der Praxis bekannte, Sicherungsvorrichtungen bestehen aus einer Vielzahl miteinander zusammenwirkender Feder- sowie Kraftübertragungselemente und Stellglieder, die mittels Verschrauben und/oder Verschweißen in dem Deckel angeordnet sind.

Die Herstellung derartiger Sicherungsvorrichtungen stellt sich jedoch als ausgesprochen aufwändig und kostenintensiv dar.
Darüber hinaus sind derartige Sicherungsvorrichtungen aufgrund ihrer aufwändigen Mechanik ausgesprochen störanfällig.

Die US-B1-6,250,729 beschreibt darüber hinaus ein verschließbares Gehäuse innerhalb der Mittelkonsole eines Kraftfahrzeugs, bei der ein Deckel zum Verschließen des Gehäuses gleitfähig auf der Öffnung des Gehäuses angeordnet und zudem schwenkbar um die gegenüberliegenden Seitenabschlusskanten der Öffnung gelagert ist. Dabei erfolgt die Verriegelung und Freigabe jeweils einer Schwenkachse durch ein innerhalb des Deckels angeordnetes verschiebbares Verriegelung- und Entriegelungselement, das auf Lagerzapfen verschiebbar die gewünschte Freigabe oder Blockierung einer jeweiligen Schwenkachse bewirkt. Auch der in der US-B1-6,250,729 beschriebene Mechanismus ist jedoch in seinem Aufbau und dem hieraus resultierenden Zusammenbau komplex und in nicht wünschenswerter Weise aufwändig gestaltet.

### Darstellung der Erfindung

Es war daher eine Aufgabe der Erfindung, ein verschließbares und aufklappbares Gehäuse, insbesondere zur Verwendung in Kraftfahrzeugen, zur Verfügung zu stellen, welches die aus dem Stand der Technik bekannten Probleme nicht aufweist.

Die Aufgabe der Erfindung wird durch ein verschließbares Gehäuse mit den Merkmalen des Anspruchs 1 gelöst. Vorteilhafte Ausgestaltung der Erfindung befinden sich in den abhängigen Ansprüchen 2 bis 7.

Es wird ein verschließbares Gehäuse zur Verfügung gestellt, das aufgrund seiner besonders einfachen Ausgestaltung auch bei häufigem Gebrauch die gewünschte Funktionsweise sicher gewährleistet. Darüber hinaus ist das erfindungsgemäße verschließbare Gehäuse besonders einfach zu bedienen und überaus kostengünstig in der Herstellung.

Die erfindungsgemäße Funktionsweise wird dabei dadurch erreicht, dass das Deckelelement und das Gehäuse gegeneinander in Längsrichtung der generell parallel zueinander angeordneten Schwenkachsen verschiebbar angeordnet sind. Eine derartig verschiebbare Anordnung kann sowohl durch ein Verschieben des abzudeckenden Gehäusekörpers relativ zum Fahrzeuginneren als auch durch ein ausschließliches Verschieben des Deckelelements, schließlich durch eine Kombination beider Bewegungen erfolgen.

Dabei sind die Schwenklager für die jeweilige Schwenkbewegung in Richtung der Schwenkachsen, somit auch in Richtung der Verschiebung von Gehäuse und/oder Deckelelement versetzt angeordnet. Die versetzte Anordnung ist dabei so ausgestaltet, dass das zu verschwenkende Deckelelement zu jedem Zeitpunkt maximal nur mit dem Schwenklager oder den Schwenklagern einer Achse in Eingriff steht.

Somit ist sicher gewährleistet, dass eine Schwenkbewegung immer nur um eine Schwenkachse erfolgen kann. Die Freigabe der Schwenkbewegung um die von den jeweiligen Schwenklagern vorgegebene Schwenkachse kann dabei über vorzugsweise gegenüber dieser Schwenkachse angeordnete Freigabemittel erfolgen.

Es wird somit ein verschließbares Gehäuse zur Verfügung gestellt, bei dem ein gleichzeitiges Lösen des Deckelelements an zwei gegenüberliegenden Seiten des Gehäuses sicher unterbunden wird, wobei auf die Verwendung aufwändiger Arretier- und/oder Freigabevorrichtungen nahezu vollständig verzichtet werden kann.

In einer besonders bevorzugten Ausführungsform der Erfindung erfolgt das Öffnen des Deckelelements durch Verschieben des Deckelelements in vorzugsweise zwei entgegengesetzte Richtungen aus dieser Eingriffsposition in eine erste Position zum Verschwenken in eine erste Richtung und vorzugsweise in eine zweite Position zum Verschwenken in eine zweite Richtung. In ganz besonders bevorzugter Ausgestaltung der Erfindung weist jede der Verschiebungsrichtungen eine derartige erste und zweite Position auf.

In einer weiteren bevorzugten Ausführungsform der Erfindung ist jeder Achse für die Schwenkbewegung genau ein Paar von Schwenklagern zu geordnet. Der Eingriff in die Schwenklager einer ersten Achse bewirkt eine Verriegelung des Deckelelements gegenüber einer zweiten Schwenkbewegung. Somit ist sichergestellt, dass ohne Ausführung weiterer Arretiermittel allein durch das in Wirkverbindung bringen des Deckelelements mit den Schwenklagern einer jeweiligen Achse ein Lösen des Deckelelements auf dieser Seite verhindert wird.

In einer weiteren bevorzugten Ausführungsform sind die Schwenkachsen dabei parallel zu den Längsachsen des Gehäuses angeordnet. Dadurch wird ein Aufklappen des Deckelelements sowohl zur Fahrer- als auch zur Beifahrerseite hin ermöglicht.

In einer bevorzugten Ausführungsform der Erfindung sind die Schwenklager der jeweiligen Achsen zueinander gleich beabstandet, jedoch verglichen mit der gegenüberliegenden Achse in Längsrichtung des Gehäuses zueinander versetzt angeordnet. In einer besonders bevorzugten Ausführungsform der Erfindung sind dabei die in die Schwenklager eingreifenden Elemente des Deckelelements nicht zueinander versetzt angeordnet.

Hierdurch wird eine besonders einfache Ausgestaltung der Erfindung zur Verfügung gestellt, durch die die erfindungsgemäße Funktionsweise besonders einfach erzielt ' wird. Dabei ist jedoch eine Ausführungsform gleich bevorzugt, bei der die Schwenklager am Gehäuse nicht zueinander versetzt angeordnet sind, und ein Versatz der in die Lager eingreifenden Elemente am Deckelelement verwirklicht ist. Schließlich ist auch eine Ausführungsform, bei der ein Versatz sowohl der Schwenklager der jeweiligen Achsen als auch der in diese Lager eingreifenden Elemente am Gehäuse sowie am Deckelelement verwirklicht ist, bevorzugt.

In einer weiteren bevorzugten Ausführungsform der Erfindung kann die relative Verschiebung von Deckelelement und Gehäuse ausschließlich in geschlossenem Zustand des Gehäuses erfolgen. Hierdurch wird mit besonders einfachen Mitteln sichergestellt, dass ein Lösen des Deckels von dem Gehäuse durch ein Nichteingreifen von Schwenklagern auf beiden Seiten des Gehäuses erfolgt, unterbunden wird.

In einer weiteren bevorzugten Ausführungsform der Erfindung befindet sich das verschließbare Gehäuse im Bereich der Mittelkonsole eines Kraftfahrzeugs, wie es üblicherweise in Kraftfahrzeugen als Staufach oder zur Aufnahme eines im Kraftfahrzeug fest installierten Mobiltelefons verwendet wird.

In einer besonders bevorzugten Ausführungsform der Erfindung weist das verschließbare Gehäuse an diesem Ort ein Deckelelement auf, welches eine besonders ausgestaltete, vorzugsweise weiche Armablage aufweist. Hierdurch wird die Haptik des verschließbaren Gehäuses sowie die Bequemlichkeit für den Fahrzeuginsassen besonders bevorzugt erhöht.

### Kurze Beschreibung der Zeichnungen

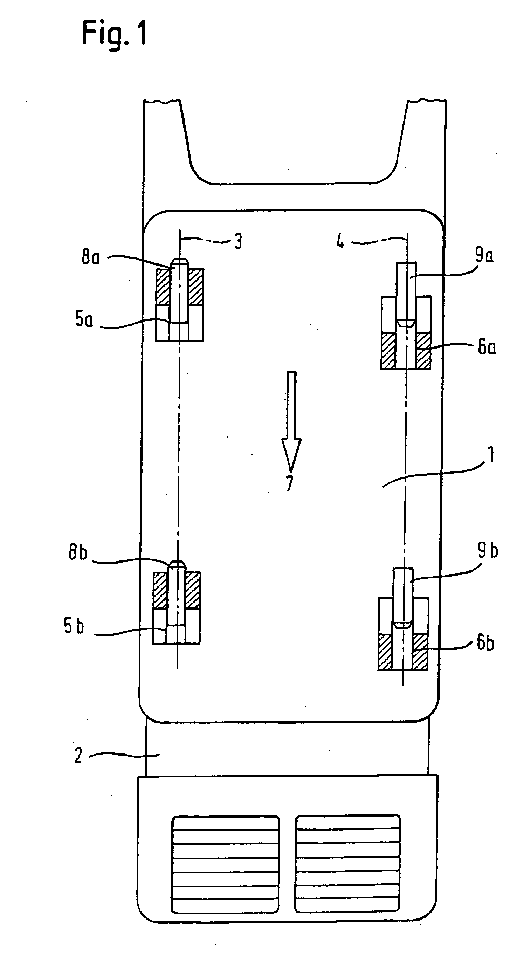

Die vorliegende Erfindung wird anhand der Fig. 1 bis 3 näher erläutert, wobei diese Figuren lediglich exemplarische Ausführungsformen der erfindungsgemäßen Vorrichtung zeigen, welche in keiner Weise zur Beschränkung des Schutzbereichs, der in den nachfolgenden Patentansprüchen definiert ist, geeignet ist. In den Figuren zeigt
Fig. 1 eine Draufsicht auf die Anordnung der jeweiligen Schwenklager in Verbindung mit den in die Lager eingreifenden Elementen;
Fig. 2 eine geschnittene Vorderansicht eines erfindungsgemäßen Gehäuses in einer ersten Schwenkposition;
Fig. 2a eine vergrößerte geschnittene Teilansicht eines in einer Aufnahme aufliegenden Lagerzapfens;
Fig. 3 eine geschnittene Vorderansicht eines erfindungsgemäßen Gehäuses in einer zweiten Schwenkposition; und
Fig. 3a eine vergrößerte geschnittene Teilansicht eines in einer Lagerbohrung eingesetzten Lagerzapfens.

### Wege zur Ausführung der Erfindung

In Fig. 1 wird eine teilweise geschnittene Draufsicht auf das Deckelelement 1 eines erfindungsgemäßen, verschließbaren Gehäuses 2 dargestellt. Im Bereich der Seitenkanten des Deckelelements 1 sind jeweils zwei Lagerzapfen angeordnet, die jeweils fluchtend auf einer Schwenkachse 3,4 angeordnet sind. An dem Gehäuse (nicht gezeigt) sind im Bereich der Schwenkachsen 3, 4 jeweils zwei Lagerbohrungen 5a, 5b und 6a, 6b angeordnet, wobei die Lagerbohrungen 5 gegenüber den Lagerbohrungen 6 in Schieberichtung 7 parallel zu den Schwenkachsen 3,4 zueinander versetzt angeordnet sind. Die Lagerbohrungen 5a, 5b, 6a, 6b weisen jeweils einen schraffiert dargestellten geschlossenen Bereich zur Ausbildung einer Lagerbohrung für den jeweiligen Lagerzapfen 8a, 8b, 9a, 9b sowie einen nicht schraffiert dargestellten und nicht geschlossenen Teil zur Ausbildung einer Auflage für den jeweiligen Lagerzapfen 8a, 8b, 9a, 9b auf. Somit ist sichergestellt, dass, wenn die Lagerzapfen 8a, 8b in die ' Lagerbohrungen 5a, 5b eingeschoben sind, die Lagerzapfen 9a, 9b außerhalb der Lagerbohrungen 6a, 6b liegen.

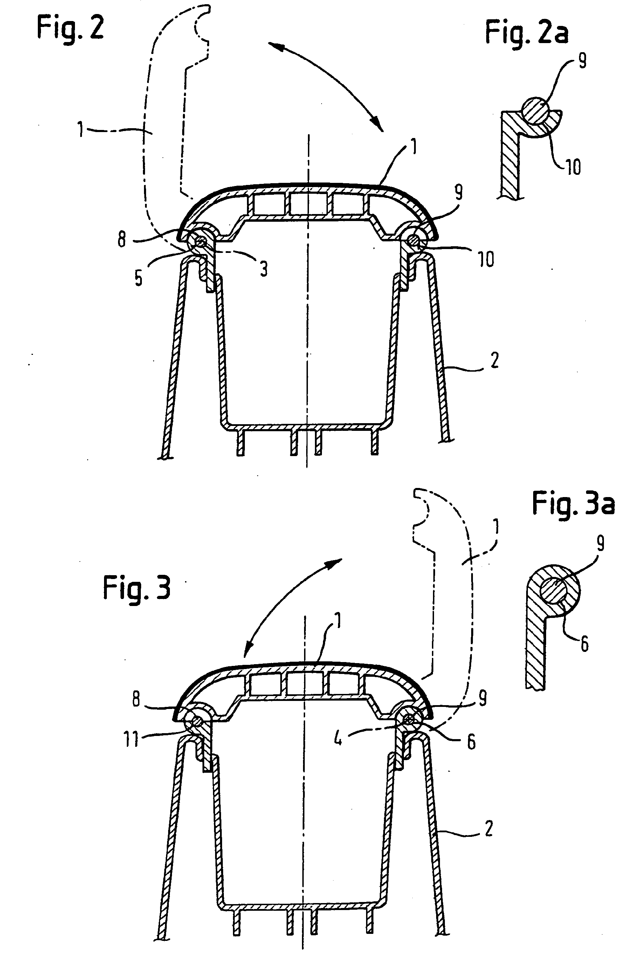

In den Fig. 2 und 2a ist ein Gehäuse 2 mit Deckelelement 1 dargestellt, wobei das Deckelelement 1 sowohl in einer geschlossenen Position als auch in einer um die Schwenkachse 3 um 90° verschwenkten Position gezeigt ist. Der Lagerzapfen 8 wird von der Lagerbohrung 5 vollständig umschlossen, wohingegen der Lagerzapfen 9 auf einer Aufnahme 10 aufliegt und somit eine Freigabe des Deckelelements auf der rechten Seite der Zeichnung ermöglicht.

Die Fig. 3 und 3a zeigen ein erfindungsgemäßes Gehäuse 2 mit Deckelelement 1, bei dem das Deckelelement 1 sowohl in einer geschlossenen als auch um die Schwenkachse 4 um 90° verschwenkten Position gezeigt wird. Hierbei liegt in der geschlossenen Position des Deckelelements 1 der Lagerzapfen 8 auf einer Aufnahme 11 auf, wohingegen der Lagerzapfen 9 innerhalb der Lagerbohrung 6 angeordnet ist. Hierdurch wird, analog zu Fig. 2, eine Schwenkbewegung um die Schwenkachse 4 ermöglicht.

## Patentansprüche

1. Verschließbares Gehäuse (2), beispielsweise zur Aufnahme eines Telefons, insbesondere zur Verwendung in Kraftfahrzeugen, mit um jeweils eine von zwei an gegenüberliegenden Seiten des Gehäuses angeordneten Achsen (3),(4) schwenkbar gelagertem Deckelelement (1),
**dadurch gekennzeichnet, dass**
das Deckelelement (1) und Gehäuse gegeneinander in Längsrichtung der Achsen (3),(4) verschiebbar gelagert sind, und
dass die Schwenklager (5),(6) für die jeweilige Schwenkbewegung in Richtung der Schwenkachsen zueinander versetzt sowie derart angeordnet sind,
dass das Deckelelement (1) jeweils nur mit dem Schwenklager oder den Schwenklagern einer Achse in Eingriff steht, so **dass** ein Eingriff in die Schwenklager einer ersten Achse eine Verriegelung des Deckelelements gegenüber einer zweiten Schwenkbewegung bewirkt.

2. Verschließbares Gehäuse gemäß Anspruch 1, **dadurch gekennzeichnet, dass** die Schwenkachsen (3),(4) parallel zu den Längsachsen des Gehäuses angeordnet sind.

3. Verschließbares Gehäuse gemäß einem der Ansprüche 1 und 2, **dadurch gekennzeichnet, dass** jeder Achse ein Paar von Schwenklagern (5a,5b),(6a,6b) zugeordnet ist.

4. Verschließbares Gehäuse gemäß einem der Ansprüche 1 - 3, **dadurch gekennzeichnet, dass** die Schwenklager der beiden Achsen (3),(4) gleich beabstandet sowie in Längsrichtung des Gehäuses versetzt zueinander angeordnet sind.

5. Verschließbares Gehäuse gemäß einem der Ansprüche 3 und 4, **dadurch gekennzeichnet, dass** die in die Schwenklager eingreifenden Elemente (8),(9) des Deckelelements nicht zueinander versetzt angeordnet sind.

6. Verschließbares Gehäuse nach einem der voranstehenden Ansprüche 1 - 5, **dadurch gekennzeichnet, dass** es im Bereich der Mittelkonsole eines Kraftfahrzeugs angeordnet ist.

7. Verschließbares Gehäuse gemäß Anspruch 6, **dadurch gekennzeichnet, dass** das Deckelelement eine vorzugsweise weiche Armablage aufweist.

## Claims

1. Closable housing (2), for example for holding a telephone, in particular for use in motor vehicles, having a lid element (1) mounted so as to be pivotable about either one of two shafts (3), (4) arranged on opposite sides of the housing,
**characterised**
**in that** the lid element (1) and housing are mounted so as to be slidable relative to each other in the longitudinal direction of the shafts (3), (4), and
**in that** the pivot bearings (5), (6) for the respective pivot movement are offset from each other in the direction of the pivot shafts and also arranged in such a way that
the lid element (1) is at any given time engaged only with the pivot bearing or bearings of one shaft, so that engagement in the pivot bearings of a first shaft causes locking of the lid element in relation to a second pivot movement.

2. Closable housing according to claim 1, **characterised in that** the pivot shafts (3), (4) are arranged parallel to the longitudinal axes of the housing.

3. Closable housing according to either of claims 1 and 2, **characterised in that** each shaft is assigned a pair of pivot bearings (5a, 5b), (6a, 6b).

4. Closable housing according to any of claims 1 - 3, **characterised in that** the pivot bearings of the two shafts (3), (4) are equally spaced apart and offset from each other in the longitudinal direction of the housing.

5. Closable housing according to either of claims 3 and 4, **characterised in that** the elements (8), (9) of the lid element which engage in the pivot bearings are not offset from each other.

6. Closable housing according to any of the preceding claims 1 - 5, **characterised in that** it is arranged in the region of the centre console of a motor vehicle.

7. Closable housing according to claim 6, **characterised**
**in that** the lid element comprises a preferably soft armrest.

## Revendications

1. Boîtier (2) susceptible d'être verrouillé, par exemple pour recevoir un téléphone, en particulier destiné à être utilisé dans des véhicules automobiles, comportant un élément de couvercle (1) monté pivotant autour d'un axe respectif parmi deux axes (3, 4) agencés sur des côtés opposés du boîtier,
**caractérisé en ce que**
l'élément de couvercle (1) et le boîtier sont montés déplaçables l'un par rapport à l'autre en direction longitudinale des axes (3), (4),
**en ce que** les paliers pivotants (5), (6) pour le mouvement de pivotement respectif sont agencés en décalage l'un par rapport à l'autre en direction des axes de pivotement, ainsi que
de telle sorte que l'élément de couvercle (1) est en engagement seulement avec le palier pivotant ou avec les paliers pivotants respectifs d'un axe, de telle sorte qu'un engagement dans les paliers pivotants d'un premier axe provoque un verrouillage de l'élément de couvercle par rapport à un deuxième mouvement de pivotement.

2. Boîtier susceptible d'être verrouillé selon la revendication 1, **caractérisé en ce que** les axes de pivotement (3), (4) sont agencés parallèlement aux axes longitudinaux du boîtier.

3. Boîtier susceptible d'être verrouillé selon l'une des revendications 1 et 2, **caractérisé en ce qu'**à chaque axe est associée une paire de paliers pivotants (5a, 5b), (6a, 6b).

4. Boîtier susceptible d'être verrouillé selon l'une des revendications 1 à 3, **caractérisé en ce que** les paliers pivotants des deux axes (3), (4) sont agencés à la même distance ainsi qu'en décalage l'un par rapport à l'autre en direction longitudinale du boîtier.

5. Boîtier susceptible d'être verrouillé selon l'une des revendications 3 et 4, **caractérisé en ce que** les éléments (8), (9) de l'élément de couvercle, qui s'engagent dans les paliers pivotants, ne sont pas agencés en décalage l'un par rapport à l'autre.

6. Boîtier susceptible d'être verrouillé selon l'une des revendications 1 à 5, **caractérisé en ce qu'**il est agencé dans la région de la console médiane d'un véhicule automobile.

7. Boîtier susceptible d'être verrouillé selon la revendication 6, **caractérisé en ce que** l'élément de couvercle présente de préférence un accoudoir souple.
